# EUROPEAN PATENT SPECIFICATION

(11) **EP 3 064 550 B1**
(45) Date of publication and mention of the grant of the patent: **21.08.2019**
(21) Application number: 14857723.2
(22) Date of filing: 24.10.2014
(51) Int. Cl.: C08L 67/03, C08K 3/22, C08K 5/02

(54) **RESIN COMPOSITION**
HARZZUSAMMENSETZUNG
COMPOSITION DE RÉSINE

(30) Priority: 01.11.2013 JP 2013227956
(43) Date of publication of application: 07.09.2016
(73) Proprietor: Sumitomo Chemical Company, Limited, Tokyo 104-8260 (JP)
(72) Inventor: TANAKA, Masaaki, Tsukuba-shi Ibaraki 300-3294 (JP); MIZUMOTO, Koichi, Ehime 792-8521 (JP)
(74) Representative: Vossius & Partner Patentanwälte Rechtsanwälte mbB
(86) International application number: PCT/JP2014/079000
(87) International publication number: WO 2015/064724

(56) References cited:
- JP-A- H08 176 287
- JP-A- H10 101 946
- JP-A- 2005 054 017
- JP-A- 2007 269 937
- JP-A- 2012 149 123
- JP-A- 2012 177 103
- US-A1- 2013 123 420
- DATABASE WPI Week 199741 Thomson Scientific, London, GB; AN 1997-444231 XP002769740, -& JP H09 202975 A (TORAY IND INC) 5 August 1997 (1997-08-05)

## Description

### TECHNICAL FIELD

The present invention relates to a resin composition.

### BACKGROUND ART

As a liquid crystal polyester resin composition, for example, a resin composition containing a glass fiber and a white pigment, i.e. titanium oxide (JP-A-03-265650) and a resin composition containing a fluorescent brightening agent and a white pigment, i.e. titanium oxide (JP-W-2004-502828) are known.

The development of a liquid crystal polyester resin composition satisfying both tracking resistance and flame retardance when formed into a thin molded body has been required.

### DISCLOSURE OF THE INVENTION

The present invention includes the aspects described in the following [1] to [2].
[1] A resin composition comprising 30 to 120 parts by mass of a white pigment, wherein the average particle size of the white pigment is 0.1 to 0.5 µm, and 0.5 to 30 parts by mass of a flame retarder, wherein the flame retarder comprises an organic halogen compound and the organic halogen compound is an organic bromine compound, per 100 parts by mass of a liquid crystal polyester.
[2] the resin composition according to [1], wherein the organic halogen compound is a compound that, as the temperature thereof is raised at a rate of 10°C/min under a nitrogen atmosphere of 0.1 MPa to measure the mass change, becomes less by 1% in mass at 300°C or higher as compared with the mass at 25°C.

### MODE FOR CARRYING OUT THE INVENTION

In the present invention, the wording "satisfying tracking resistance" refers to the state in which, when a tracking resistance test is conducted by using 3-mm-thick test specimens at an applied voltage of 250 V in accordance with IEC60112, the average of the numbers of electrolyte solution drops until breaking is 50 drops or more.

The wording "satisfying flame retardance when thinly molded" refers to a state in which, when the UL94V 20 mm vertical flame test (IEC60695-11-10B method) is conducted by using a 0.30-mm-thick test specimen to evaluate the flame retardance of the test specimen, the flammability of the specimen is V-0.

The present invention is described below in detail.

### <Liquid crystal polyester>

It is preferable that the liquid crystal polyester is a liquid crystal polyester that shows liquid crystallinity in a molten state and melts at a temperature of 450°C or less.

The liquid crystal polyester may be a liquid crystal polyester amide, a liquid crystal polyester ether, a liquid crystal polyester carbonate, or a liquid crystal polyester imide. It is preferable that the liquid crystal polyester is a wholly aromatic liquid crystal polyester consisting of only an aromatic compound as a raw material monomer.

Typical examples of liquid crystal polyesters include:
a polyester obtained by the polymerization (polycondensation) of an aromatic hydroxycarboxylic acid, an aromatic dicarboxylic acid, and at least one kind of compound selected from the group consisting of aromatic diols, aromatic hydroxylamines, and aromatic diamines;
a polyester obtained by the polymerization of several kinds of aromatic hydroxycarboxylic acids;
a polyester obtained by the polymerization of an aromatic dicarboxylic acid and at least one kind of compound selected from the group consisting of aromatic diols, aromatic hydroxylamines, and aromatic diamines; and
a polyester obtained by the polymerization of a polyester, such as polyethylene terephthalate, and an aromatic hydroxycarboxylic acid.

Here, with respect to aromatic hydroxycarboxylic acids, aromatic dicarboxylic acids, aromatic diols, aromatic hydroxylamines, and aromatic diamines, each may be partially or totally replaced with a polymerizable derivative thereof (hereinafter, this derivative is referred to as "derivative") .

Examples of derivatives of compounds having a carboxyl group, such as an aromatic hydroxycarboxylic acid or an aromatic dicarboxylic acid, include a compound having the carboxyl group converted into an alkoxycarbonyl group or an aryloxycarbonyl group (ester), a compound having the carboxyl group converted into a haloformyl group (acid halide), and a compound having the carboxyl group converted into an acyloxycarbonyl group (acid anhydride).

Examples of derivatives of compounds having a hydroxyl group, such as an aromatic hydroxycarboxylic acid, an aromatic diol, and an aromatic hydroxylamine, include a compound having the hydroxyl group acylated into an acyloxyl group (acylated product).

Examples of derivatives of compounds having an amino group such as an aromatic hydroxylamine and an aromatic diamine, include a compound having the amino group acylated into an acylamino group (acylated product).

The liquid crystal polyester preferably has a repeating unit represented by the following formula (1) (hereinafter sometimes referred to as "repeating unit (1)"), and more preferably has a repeating unit (1), a repeating unit represented by the following formula (2) (hereinafter sometimes referred to as "repeating unit (2)"), and a repeating unit represented by the following formula (3) (hereinafter sometimes referred to as "repeating unit (3)").

(1) -O-Ar¹-CO-

(2) -CO-Ar²-CO-

(3) -X-Ar³-Y-

(Ar¹ represents a phenylene group, a naphthylene group, or a biphenylylene group. Ar² and Ar³ each independently represent a phenylene group, a naphthylene group, a biphenylylene group, or a group represented by the following formula (4). X and Y each independently represent an oxygen atom or an imino group (-NH-) . The hydrogen atoms in each group represented by Ar¹, Ar², or Ar³ are each independently optionally substituted with a halogen atom, an alkyl group, or an aryl group.)

(4) -Ar⁴-Z-Ar⁵-

(Ar⁴ and Ar⁵ each independently represent a phenylene group or a naphthylene group. The hydrogen atoms in each group represented by Ar⁴ or Ar⁵ are each independently optionally substituted with a halogen atom, an alkyl group, or an aryl group. Z represents an oxygen atom, a sulfur atom, a carbonyl group, a sulfonyl group, or an alkylidene group.)

Examples of halogen atoms include a fluorine atom, a chlorine atom, a bromine atom, and an iodine atom.

Examples of alkyl groups include C₁₋₁₀ alkyl groups such as a methyl group, an ethyl group, an n-propyl group, an isopropyl group, an n-butyl group, an isobutyl group, an s-butyl group, a t-butyl group, an n-hexyl group, a 2-ethylhexyl group, an n-octyl group, and an n-decyl group.

Examples of aryl groups include C₆₋₂₀ aryl groups such as a phenyl group, an o-tolyl group, an m-tolyl group, a p-tolyl group, a 1-naphthyl group, and a 2-naphthyl group.

The number of substituents that Ar¹, Ar², and Ar³ each independently have is usually 2 or less, and preferably 1 or less.

It is preferable that Ar⁴ and Ar⁵ are each independently a phenylene group or a naphthylene group.

Examples of alkylidene groups include C₁₋₁₀ alkylidene groups such as a methylene group, an ethylidene group, an isopropylidene group, an n-butylidene group, and a 2-ethylhexylidene group.

The repeating unit (1) is a repeating unit derived from a predetermined aromatic hydroxycarboxylic acid. Preferred examples of repeating units (1) include a repeating unit wherein Ar¹ is a p-phenylene group (repeating unit derived from p-hydroxybenzoic acid) and a repeating unit wherein Ar¹ is a 2,6-naphthylene group (repeating unit derived from 6-hydroxy-2-naphthoic acid).

The repeating unit (2) is a repeating unit derived from a predetermined aromatic dicarboxylic acid. Preferred examples of repeating units (2) include a repeating unit wherein Ar² is a p-phenylene group (repeating unit derived from terephthalic acid), a repeating unit wherein Ar² is an m-phenylene group (repeating unit derived from isophthalic acid), a repeating unit wherein Ar² is a 2,6-naphthylene group (repeating unit derived from 2,6-naphthalenedicarboxylic acid), and a repeating unit wherein Ar² is a diphenyl ether-4,4'-diyl group (repeating unit derived from diphenyl ether-4,4'-dicarboxylic acid).

The repeating unit (3) is a repeating unit derived from a predetermined aromatic diol, aromatic hydroxylamine, or aromatic diamine.

Preferred examples of repeating units (3) include a repeating unit wherein Ar³ is a p-phenylene group (repeating unit derived from hydroquinone, p-aminophenol, or p-phenylenediamine) and a repeating unit wherein Ar³ is a 4,4'-biphenylylene group (repeating unit derived from 4,4'-dihydroxybiphenyl, 4-amino-4'-hydroxybiphenyl, or 4,4'-diaminobiphenyl).

The content of the repeating unit (1) is usually 30 mol% or more, preferably 30 to 80 mol%, more preferably 40 to 70 mol%, and still more preferably 45 to 65 mol%, of the total repeating units.

The content of the repeating unit (2) is usually 35 mol% or less, preferably 10 to 35 mol%, more preferably 15 to 30 mol%, and still more preferably 17.5 to 27.5 mol%, of the total repeating units.

The content of the repeating unit (3) is usually 35 mol% or less, preferably 10 to 35 mol%, more preferably 15 to 30 mol%, and still more preferably 17.5 to 27.5 mol%, of the total repeating units.

The wording "total repeating units" means a value which is determined the molar-equivalent amount of each repeating unit by dividing the mass of each repeating unit forming the liquid crystal polyester with the formula weight of the repeating unit and summed the results.

As the content of the repeating unit (1) is higher, the melt fluidity, heat resistance, or strength/rigidity is likely to improve. The content is preferably kept within the above range so that the melting temperature, the melt viscosity, or the temperature required for molding may not become too high.

The ratio between the content of the repeating unit (2) and the content of the repeating unit (3) is, as [the content of the repeating unit (2)] / [the content of the repeating unit (3)] (mol/mol), usually 0.9/1 to 1/0.9, preferably 0.95/1 to 1/0.95, and more preferably 0.98/1 to 1/0.98.

The liquid crystal polyester may have two or more kinds of each of the repeating units (1) to (3). The liquid crystal polyester may also have repeating units other than the repeating units (1) to (3), but the content thereof is usually 10 mol% or less, preferably 5 mol% or less, of the total repeating units.

As a repeating unit (3),the liquid crystal polyester preferably has a repeating unit wherein X and Y are each an oxygen atom, that is to say having a repeating unit derived from a predetermined aromatic diol, in terms of being likely to be low the melt viscosity. It is more preferable that, as a repeating unit (3), the liquid crystal polyester has only a repeating unit wherein X and Y are each an oxygen atom.

It is preferable that the liquid crystal polyester is produced by melt-polymerizing the raw material monomer corresponding to the repeating unit, and the resulting polymer (hereinafter sometimes referred to as "prepolymer") solid-state polymerizing . As a result, a high-molecular-weight liquid crystal polyester having high heat resistance and high strength/rigidity can be produced with sufficient operability. Melt polymerization may be performed in the presence of a catalyst. Examples of such catalysts include metal compounds, such as magnesium acetate, tin (I) acetate, tetrabutyl titanate, lead acetate, sodium acetate, potassium acetate, and antimony trioxide, and nitrogen-containing heterocyclic compounds, such as 4-(dimethylamino)pyridine and 1-methylimidazole, and it is preferable to use a nitrogen-containing heterocyclic compound.

The flow beginning temperature of the liquid crystal polyester is usually 270°C or more, preferably 270 to 400°C, and more preferably 280 to 380°C. As the flow beginning temperature is higher, the heat resistance or strength/rigidity is likely to improve. The flow beginning temperature is preferably kept within the above range so that the melting temperature, the melt viscosity, or the temperature required for molding may not become too high.

Flow beginning temperature is also called flow temperature, and refers to a temperature at which a viscosity of 4800 Pa·s (48000 poise) is shown under the following conditions: using a capillary rheometer, a liquid crystal polyester is melted under a load of 9.8 MPa (100 kg/cm²) while raising a temperature at a rate of 4°C/min and extruded through a nozzle having an inner diameter of 1 mm and a length of 10 mm, which serves as an index of the molecular weight of the liquid crystal polyester (see Naoyuki KOIDE ed., "Ekisho Porima -Gosei, Seikei, Oyou- (Liquid Crystal Polymer -Synthesis, Molding, Application-", CMC, June 5, 1987, p. 95) .

The content of the liquid crystal polyester in the resin composition is usually 1 to 100 parts by mass, preferably 5 to 50 parts by mass, per 100 parts by mass of the amorphous resin.

As the content of the liquid crystal polyester is higher, the melt fluidity of the resin composition is likely to improve. Meanwhile, in order to reduce both the mold shrinkage of the resin composition in MD (Machine Direction: the flow direction during molding) and the mold shrinkage of the resin composition in the TD direction (Transverse Direction: the direction perpendicular to the flow direction during molding), it is preferable that the content is within the above range.

### <White pigment>

Examples of white pigments include titanium oxide, barium sulfate, aluminum hydroxide, magnesium hydroxide, zinc oxide, calcium carbonate, aluminum oxide, magnesium oxide, antimony oxide, zirconium oxide, and zinc sulfide. Aluminum hydroxide or titanium oxide is preferable, and titanium oxide is more preferable.

As the titanium oxide, one commercially available as a resin filler can be used as it is, and unintentionally contained impurities are not intended to be eliminated. Titanium oxide subjected to a surface treatment as described below can also be used.

The crystal form of the titanium oxide is not particularly limited, and a white pigment containing rutile-type titanium oxide, anatase-type titanium oxide, or titanium oxide obtained by mixing both the types at any ratio may be used, but a white pigment containing rutile-type titanium oxide is preferably used.

The titanium oxide can be used by subjecting it to a surface treatment as necessary. Such a surface treatment is not particularly limited, but one obtained by a surface treatment with a hydrate or the like of an inorganic metal oxide is preferable.

Examples of commercially available products of the titanium oxide include TIPAQUE CR-60, CR-50, CR-58, CR-67, CR-EL and PF-739 sold by ISHIHARA SANGYO KAISHA, LTD., particle titanium oxide JR-301, JR-405, JR-605, and JR sold by Tayca Corporation, and titanium oxide R-25, SR-1, R-42, R-21 and R-62N sold by Sakai Chemical Industry Co., Ltd.

Titanium oxide produced by a common means can also be used, and titanium oxide produced by a so-called chlorine method is preferable. The chlorine method is a method in which an ore (e.g. a rutile ore and a synthesized rutile obtained from an ilmenite ore) as a titanium source is reacted with chlorine at around 1000°C to give crude titanium tetrachloride, and the crude titanium tetrachloride is purified by rectification to give a titanium tetrachloride, which is oxygenized with oxygen to give titanium oxide. In this chlorine method, rutile-type titanium oxide having a suitable crystal form can be obtained.

As the white pigment in the present invention, a crystal form of aluminum hydroxide preferably is boehmite, which is a monohydrate, in terms of that the boehmite is high in heat resistance. Aluminum hydroxide may also include a crystal form other than that of the boehmite, but the content of the boehmite is preferably 80% or more and 100% or less in order to keep the high heat resistance.

The content of the boehmite can be calculated from the amount of dehydration of when the aluminum hydroxide is raised from room temperature to 1100°C and is dehydrated.

As the boehmite, one that is commercially available may be used, or boehmite obtained by subjecting aluminum hydroxide having the crystal form of gibbsite, a trihydrate, to a hydrothermal treatment in an autoclave at a temperature of 150°C or higher and 300°C or lower may also be used.

The particle size of the white pigment is not particularly limited, but the average particle size is 0.1 to 0.5 µm.

The measurement of the average particle size can be conducted as follows.

First, the outer appearance of a white pigment is measured with a scanning electron microscope (SEM), and then, by using an image analysis apparatus (e.g. LUZEX IIIU manufactured by NIRECO CORPORATION), a distribution curve is obtained from the obtained SEM picture by plotting the particle amounts (%) of primary particles in each particle size range. Subsequently, a cumulative distribution curve is obtained from the distribution curve, and the value at a cumulative degree of 50% in the cumulative distribution curve is read to determine the average particle size.

The white pigment having the above average particle size can be used by selecting from commercially available products or can be obtained by, for example, classifying particles of a commercially available product by a usual classification method.

In the resin composition of the present invention, the content of the white pigment is 30 to 120 parts by mass, preferably 30 to 100 parts by mass, more preferably 40 to 70 parts by mass, per 100 parts by mass of the liquid crystal polyester.

By containing the content 30 parts by mass or more, a composition excellent in tracking resistance can be obtained. By containing the content 120 parts by mass or less, the composition is made excellent in mechanical/physical properties. A resin composition containing a plurality of kinds of white pigments is acceptable as long as the total mass of the white pigments is within the above range.

### <Flame retarder>

As a flame retarder, an organic halogen compound which is an organic bromine compound is used.

Such an organic halogen compound is more preferably a compound that, as the temperature thereof is raised at a rate of 10°C/min under a nitrogen atmosphere of 0.1 MPa to measure the mass change, becomes less by 1% in mass at 300°C or higher as compared with the mass at 25°C.

The halogen compound is preferably an organic bromine compound, and the content of bromine is more preferably 60% or more.

As the flame retarder, only one compound may be used, or two or more compounds may be used in combination.

Examples of flame retarders include a halogenated aromatic bisimide compound (e.g. ethylenebis(tetrabromophthalimide) (SAYTEX (registered trademark) BT-93 (hereinafter, "BT-93") and SAYTEX (registered trademark) BT-93W (hereinafter, "BT-93W") sold from ALBEMARLE JAPAN CORPORATION), an halogenated aromatic epoxy compound (F-2100L sold from ICL JAPAN Ltd.), halogenated polycarbonate (FG-8500 sold from TEIJIN LIMITED), halogenated polystyrene (SAYTEX (registered trademark) HP-7010 (hereinafter, "HP-7010") and SAYTEX (registered trademark) HP-3010 (hereinafter, "HP-3010") sold from ALBEMARLE JAPAN CORPORATION), and ethylenebis(pentabromophenyl) (SAYTEX (registered trademark) 8010 (hereinafter, "8010") sold from ALBEMARLE JAPAN CORPORATION).

In the resin composition of the present invention, the content of the flame retarder is 0.5 to 30 parts by mass, preferably 0.5 to 20 parts by mass, more preferably 0.5 to 10 parts by mass, per 100 parts by mass of the liquid crystal polyester.

By containing the content of the flame retarder 0.5 parts by weight or more, the composition can be made excellent in flame retardance. By containing the content 30 parts by weight or less, the composition can be made excellent in mechanical/physical properties. A resin composition containing two or more kinds of flame retarders is acceptable as long as the total mass of the flame retarders is in the above range.

### <Other components>

The resin composition of the present invention may contain, in addition to the white pigment and the flame retarder, one or more kinds of other components such as a filler, an additive, and a resin other than the liquid crystal polyester, as long as the effects of the present invention are not impaired.

The filler may be a fibrous filler or a platy filler, or may be, other than the fibrous and platy fillers, a spherical filler or any other particulate filler. In addition, the filler may be an inorganic filler or an organic filler. Examples of fibrous inorganic fillers include glass fibers; carbon fibers such as a PAN-based carbon fiber and a pitch-based carbon fiber; ceramic fibers such as a silica fiber, an alumina fiber, and a silica alumina fiber; and metal fibers such as a stainless fiber. Examples also include whiskers such as a potassium titanate whisker, a barium titanate whisker, a wollastonite whisker, an aluminum borate whisker, a silicon nitride whisker, and a silicon carbide whisker. Examples of fibrous organic fillers include a polyester fiber and an aramid fiber. Examples of platy inorganic fillers include talc, mica, graphite, wollastonite, and glass flakes. The mica may be muscovite, phlogopite, fluorphlogopite, or tetrasilisic mica. Examples of particulate inorganic fillers include a silica, a glass bead, a glass balloon, boron nitride, and silicon carbide. The content of the filler is usually 0 to 90 parts by mass, preferably 5 to 60 parts by mass, more preferably 10 to 50 parts by mass, per 100 parts by mass of the liquid crystal polyester.

Examples of additives include an antioxidant, a heat stabilizer, a UV absorber, an antistatic agent, a surfactant, and a colorant other than the white pigment. The content of the additive is usually 0 to 10 parts by mass per 100 parts by mass of the liquid crystal polyester.

Examples of resins other than the liquid crystal polyester include thermoplastic resins other than the liquid crystal polyester, such as polypropylene, a polyamide, a polyester other than the liquid crystal polyester, polysulfone, polyphenylenesulfide, a polyetherketone, polycarbonate, a polyphenylene ether, and polyetherimide; thermosetting resins such as a phenol resin, an epoxy resin, a polyimide resin, and a cyanate resin, and a melamine resin. The content of the resin other than the liquid crystal polyester is usually 0 to 20 parts by mass per 100 parts by mass of the liquid crystal polyester.

### <Production method>

It is preferable that the resin composition of the present invention is prepared by melt-kneading a liquid crystal polyester, a white pigment, and a flame retarder, together with other components used as necessary, using an extruder, followed by extrusion into pellets. As the extruder, it is preferable to use an extruder that includes a cylinder, at least one screw provided in the cylinder, and at least one supply port provided to the cylinder, and it is more preferable to use an extruder that further includes at least one vent portion provided to the cylinder.

As a method of producing a molded body of the resin composition of the present invention, a melt molding method in which the pellets of the resin composition obtained by the above production method are used is preferable, and examples thereof include an injection molding method, extrusion molding methods such as a T-die method and an inflation method, a compression molding method, a blow molding method, a vacuum molding method, and a press molding method. Among them, the injection molding method is preferable.

The above additive may be melt-kneaded in the extruder during production of the resin composition, or may be blended into the melt-kneaded and extruded pellets (e.g. blending with a tumbler mixer, a ribbon blender or the like).

### <Applications>

Examples of products/components as molded bodies of the resin composition of the present invention include relay/switch components of home electrical appliances/FA or the like; camera module components; motor components; sensor components; diaphragms such as a speaker diaphragm; lamp components such as a reflector, a lamp holder, and a housing; automobile/vehicle related components such as a switch and relay related component of, for example, a power window, a wiper, a starter, and an air conditioner of an automobile, a motor insulator/wiper motor related component, an in-vehicle connector (e.g. a fuse connector), a step motor rotor, a solenoid bobbin, and an ignition apparatus casing; connector components such as a RIMM, DDR or CPU socket, a S/O DIMM board to board connector, a FPC connector, and a card connector; a transformer bobbin; an optical pickup bobbin; relay components such as a relay casing, a relay base, a relay spool, and a relay armature; printer components such as a heater holder, a separation claw, and a guide; dishes such as ovenware; sealing members such as a semiconductor element sealing member and a coil sealing member, a socket, a condenser, a plug, a printed wiring board, a power module, a liquid crystal display component, a compact motor, a motor brush holder component; components of home electrical appliances such as an air conditioner, an air cleaner, a rice cooker, a microwave oven, a refrigerator, a television, a light, an iron, and a hair dryer; related components used in a power meter or the like having a communication function, such as a smart meter; electric/electronic components represented by computer related components or the like; electric electronic components used in a smartphone, a tablet, a computer or the like; electric electronic components for railways/aircrafts or the like; telephone/communication system related components; OA apparatus related components such as a facsimile, a copying machine, and an office computer; FA related components for industrial machines or the like; in-vehicle related components; video/sound/optical apparatus components such as an audio/laser disc (registered trademark), a compact disc, Blu-ray Disc, a DVD multi-drive or the like; and optical apparatus/precision instrument related components such as a motor component, a digital camera, and a watch.

### EXAMPLES

The present invention is further described below in derail by way of examples.

### Production Example 1 [Production of Liquid Crystal Polyester]

In a reactor equipped with a stirring device, a torque meter, a nitrogen gas introducing pipe, a thermometer, and a reflux condenser, 994.5 g (7.2 mol) of p-hydroxybenzoic acid, 446.9 g (2.4 mol) of 4,4'-dihydroxybiphenyl, 299.0 g (1.8 mol) of terephthalic acid, 99.7 g (0.6 mol) of isophthalic acid, and 1347.6 g (13.2 mol) of acetic anhydride were placed, and 0.2 g of 1-methylimidazole were added. The gas in the reactor was adequately replaced with nitrogen gas and then, the temperature was raised to 150°C over 30 minutes in a nitrogen gas flow, followed by refluxing for 1 hour with the same temperature maintained. Subsequently, while distilling off the by-produced acetic acid and unreacted acetic anhydride, the temperature was raised to 320°C over 2 hours and 50 minutes. Until the time when an increase in torque was observed, the content was maintained at the same temperature to give a prepolymer.

The obtained prepolymer was cooled to room temperature to be solidified. The obtained solid matter was ground in a grinder, and the obtained powder was raised from room temperature to 250°C over 1 hour in a nitrogen atmosphere, then raised from 250°C to 285°C over 5 hours, and maintained at the same temperature for 3 hours, thereby causing solid-state polymerization. The flow temperature of the liquid crystal polyester obtained by cooling was 328°C.

### [White Pigment]

As the white pigment, the titanium oxide TIPAQUE CR-58 (average particle size 0.28 µm, hereinafter, "CR-58") and TIPAQUE CR-60 (average particle size 0.21 µm, hereinafter, "CR-60") manufactured by ISHIHARA SANGYO KAISHA, LTD. were used.

### [Flame Retarder]

As the flame retarder, the commercially available products (all manufactured by ALBEMARLE JAPAN CORPORATION (SAYTEX (registered trademark))) described in Table 1 were used.

**Table 1**

| Code | Item name | Content of bromine (%) | Temperature at 1% decrease (°C) |
|---|---|---|---|
| FR1 | BT-93 | 67 | 349 |
| FR2 | BT-93W | 67 | 421 |
| FR3 | 8010 | 82 | 353 |
| FR4 | HP-7010 | 68 | 371 |
| FR5 | HP-3010 | 68 | 363 |

In Table 1, the wording "temperature at 1% decrease" means a temperature at which each flame retarder decreases by 1% by mass from the mass at 25°C when the mass change thereof is measured by raising the temperature at a rate of 10°C/min in a nitrogen atmosphere of 0.1 MPa, at a flow rate of 50 ml/min by using the thermogravimetric analyzer TGA-50 manufactured by SHIMADZU CORPORATION.

### [Other Components]

As the glass fiber, the chopped glass fiber CS03-JAPx-1 manufactured by Owens Corning Corporation, and as the talc, the talc X-50 manufactured by NIPPON TALC Co., Ltd. were used.

### Examples 1 to 11 and Comparative Examples 1 to 6

The white pigments and the flame retarders were blended with 100 parts by weight of the liquid crystal polyester obtained in Production Example 1 at the ratios respectively shown in Tables 3 to 5. Subsequently, using a twin-screw extruder ("PCM-30" manufactured by Ikegai Tekko Co., Ltd.), the mixture was melt-kneaded under the conditions of 340°C and a screw rotation rate of 150 rpm, and then formed into pellets of the resin composition.

### [Evaluation of Tracking Resistance]

The obtained pellet-shaped resin composition was molded with an injection molding machine ("PS40E5ASE type" manufactured by Nissei Plastic Industrial Co., Ltd.) at 350°C into a planar test piece of 64 mm × 64 mm × 3 mm.

In accordance with the test method of the tracking resistance test (IEC60112), an electrolyte solution was dropped onto the test piece at an applied voltage of 250 V, and the number of drops until breaking was measured.

The tracking resistance was evaluated by the following criteria and the results were shown in Tables 3 to 5.
Circle: 50 drops or more of average number of drops until breaking
Cross: less than 50 drops of average number of drops until breaking

### [Evaluation of Flame Retardance When Formed into Thin Molded Body]

The obtained pellet-shaped resin composition was molded with an injection molding machine ("UH1000-80 type" manufactured by Nissei Plastic Industrial Co., Ltd.) at 350°C into a thin test piece of 126 mm × 12.8 mm × 0.30 mm or 126 mm × 12.8 mm × 0.20 mm. By using the test piece and on the basis of the UL94V 20 mm vertical flame test (IEC60695-11-10B method), the test piece was vertically installed in a clamp, then a 20-mm flame was applied for 10 seconds twice, and the flame behavior was categorized into V-0, V-1, and V-2 in accordance with the criteria for judgment of flame retardance shown in Table 2. One whose flammability belongs to V-0 was shown as "circle," and one whose flammability belongs to V-1 or lower was shown as "cross" in Tables 3 to 5.

**Table 2**

| | Categories of flammability | | |
|---|---|---|---|
| | V-0 | V-1 | V-2 |
| Burning time of each test piece | 10 sec or less | 30 sec or less | 30 sec or less |
| Total 5 piece burning time | 50 sec or less | 250 sec or less | 250 sec or less |
| Total burning and glowing time of each test piece | 30 sec or less | 60 sec or less | 60 sec or less |
| Burning up to clamp | None | None | None |
| Ignition of cotton by dripping | None | None | Yes |

**Table 3**

| | Example 1 | Example 2 | Example 3 | Example 4 | Example 5 | Example 6 |
|---|---|---|---|---|---|---|
| Liquid crystal polyester | 100 | 100 | 100 | 100 | 100 | 100 |
| CR-60 | 40 | 40 | 55 | 65 | 65 | 100 |
| FR1 | 4 | 5 | 20 | 1 | 5 | 6 |
| Glass fiber | | 18 | | | 11 | |
| Talc | | 18 | | | | |
| Flame retardance (0.30 mm) | ○ | ○ | ○ | ○ | ○ | ○ |
| Flame retardance (0.20 mm) | | ○ | | | ○ | |
| Tracking resistance | ○ | ○ | ○ | ○ | ○ | ○ |

**Table 4**

| | Comparative Example 1 | Comparative Example 2 | Comparative Example 3 | Comparative Example 4 | Comparative Example 5 | Comparative Example 6 |
|---|---|---|---|---|---|---|
| Liquid crystal polyester | 100 | 100 | 100 | 100 | 100 | 100 |
| CR-60 | 22 | 100 | 20 | 130 | 170 | 55 |
| FR1 | | | 4 | 7 | 8 | 40 |
| Flame retardance (0.30 mm) | × | × | ○ | * | * | * |
| Tracking resistance | × | ○ | × | ○ | ○ | ○ |

| | | | | | | |
|---|---|---|---|---|---|---|
| *: A test piece could not be obtained due to insufficient flowing during molding of a test piece (0.30 mm thickness). | | | | | | |

**Table 5**

| | Example 7 | Example 8 | Example 9 | Example 10 | Example 11 |
|---|---|---|---|---|---|
| Liquid crystal polyester | 100 | 100 | 100 | 100 | 100 |
| CR-58 | 73 | 73 | 73 | 73 | 73 |
| FR1 | 5 | | | | |
| FR2 | | 5 | | | |
| FR3 | | | 5 | | |
| FR4 | | | | 5 | |
| FR5 | | | | | 5 |
| Glass fiber | 9 | 9 | 9 | 9 | 9 |
| Flame retardance (0.30 mm) | ○ | ○ | ○ | ○ | ○ |
| Tracking resistance | ○ | ○ | ○ | ○ | ○ |

### INDUSTRIAL APPLICABILITY

The resin composition of the present invention can be used for applications such as electric/electronic/electric equipment related components, automobile related components, precision instrument related components, and OA apparatus related components.

## Claims

1. A resin composition comprising
30 to 120 parts by mass of a white pigment, wherein the average particle size of the white pigment is 0.1 to 0.5 µm, and
0.5 to 30 parts by mass of a flame retarder, wherein the flame retarder comprises an organic halogen compound and the organic halogen compound is an organic bromine compound
per 100 parts by mass of a liquid crystal polyester.

2. The resin composition according to claim 1, wherein the organic halogen compound is a compound that, as the temperature thereof is raised at a rate of 10°C/min under a nitrogen atmosphere of 0.1 MPa to measure the mass change, becomes less by 1% in mass at 300°C or higher as compared with the mass at 25°C.

## Patentansprüche

1. Eine Harzzusammensetzung, umfassend
30 bis 120 Massenteile eines weißen Pigments, wobei die durchschnittliche Teilchengröße des weißen Pigments 0,1 bis 0,5 µm beträgt, und
0,5 bis 30 Massenteile eines Flammschutzmittels, wobei das Flammschutzmittel eine organische Halogenverbindung umfasst und die organische Halogenverbindung eine organische Bromverbindung ist
pro 100 Massenteile eines Flüssigkristallpolyesters.

2. Die Harzzusammensetzung nach Anspruch 1, wobei die organische Halogenverbindung eine Verbindung ist, die, wenn ihre Temperatur bei einer Geschwindigkeit von 10°C/min unter einer Stickstoffatmosphäre von 0,1 MPa zur Messung der Massenänderung erhöht wird, bei 300°C oder höher um 1% in der Masse weniger wird im Vergleich zur Masse bei 25°C.

## Revendications

1. Composition de résine comprenant
de 30 à 120 parties en masse d'un pigment blanc, dans laquelle la taille moyenne de particule du pigment blanc est de 0,1 à 0,5 µm, et
de 0,5 à 30 parties en masse d'un retardateur de flamme, dans laquelle le retardateur de flamme comprend un composé d'halogène organique et le composé d'halogène organique est un composé de brome organique
pour 100 parties en masse d'un polyester de cristal liquide.

2. Composition de résine selon la revendication 1, dans laquelle le composé d'halogène organique est un composé qui, lorsque sa température est élevée à une vitesse de 10°C/min sous une atmosphère d'azote de 0,1 MPa pour mesurer la modification de masse, devient inférieur à 1 % en masse à 300°C ou supérieur en comparaison avec la masse à 25°C.
